# EUROPEAN PATENT APPLICATION

(11) **EP 1 967 552 A1**
(43) Date of publication of application: **10.09.2008**
(21) Application number: 06834745.9
(22) Date of filing: 08.12.2006
(51) Int. Cl.: C09C 1/56, C09C 3/12, C09D 17/00

(54) **SURFACE-MODIFIED CARBON BLACK AND DISPERSIONS THEREOF**

(30) Priority: 12.12.2005 JP 2005357458
(71) Applicant: Tokai Carbon Company, Ltd., Minato-ku, Tokyo 107-8636 (JP)
(72) Inventor: SEKIYAMA, Makoto, Tokyo 107-8636 (JP); KIRINO, Tomoaki, Tokyo 107-8636 (JP)
(74) Representative: Müller-Wolff, Thomas
(86) International application number: PCT/JP2006/325002
(87) International publication number: WO 2007/069707

(57) **Abstract**

Surface-modified carbon black which exhibits excellent dispersibility in a silicone oil (non-polar medium) and a dispersion of the surface-modified carbon black are disclosed. The surface-modified carbon black includes an isocyanate compound having isocyanate groups on both ends and chemically bonded to a functional group on the surface of the carbon black, the isocyanate compound being chemically bonded to a reactive silicone polymer. The surface-modified carbon black dispersion is produced by dissolving an isocyanate compound having isocyanate groups on both ends in a solvent, adding carbon black to the solution, mixing the components so that one of the isocyanate groups is bonded to the surface of the carbon black via a urethane bond, removing an unreacted isocyanate compound, dispersing the carbon black in a silicone oil, and adding a reactive silicone polymer to the dispersion, followed by mixing and deaeration.

## Description

### TECHNICAL FIELD

The present invention relates to a surface-modified carbon black which exhibits excellent dispersibility in a low-polar solvent and a non-polar solvent (e.g., silicone oil), produces a composition which exhibits excellent electrical properties when incorporated in a polymer, and is used for electronic devices which can be driven at a low voltage, and relates also to a dispersion of the surface-modified carbon black.

### BACKGROUND ART

Carbon black is basically lipophilic and exhibits very poor dispersibility in a polar solvent such as water. In recent years, carbon black provided with excellent water-dispersibility has been extensively researched and developed mainly aimed at an inkjet printer ink application and the like.

A dispersion in which carbon black is stably dispersed in a low-polar solvent or a non-polar solvent has also been strongly desired. For example, development of a carbon black dispersion used for a composition (e.g., ink and paint), a color filter black matrix, a display device, and the like has been desired.

For example, JP-A-8-337624 discloses a carbon black graft polymer which exhibits excellent dispersibility in a medium used for an ink, a copier toner, a paint, a resin coloring agent, and the like, wherein the carbon black graft polymer contains a polymer portion that contains a silicone component and carbon black, and has a breakdown voltage of 0.5 kV/mm or more when dispersed in a silicone oil. The carbon black graft polymer is provided with sufficient dispersibility in a low-polar medium by incorporating the polymer chain of the silicone component in the polymer portion of the carbon black graft polymer.

JP-A-9-272706 discloses a reactive carbon black graft polymer obtained by reacting functional groups on the surface of carbon black with a polymer that contains a segment (A) having a group (1) reactive with functional groups on the surface of carbon black and a segment (B) having a chain structure differing from that of the segment (A), wherein the segments (A) and (B) have a group (2) reactive with a matrix of a desired medium.

However, since an epoxy group is used as the reactive group, a catalyst is used to open the three-membered ring. Therefore, the catalyst remains in the dispersion. JP-A-9-272706 does not disclose graft carbon black to which a silicone compound is bonded by bonding an isocyanate group to a polysiloxane.

### DISCLOSURE OF THE INVENTION

The inventors of the present invention conducted studies on surface modification of carbon black which exhibits excellent dispersibility in a silicone oil (non-polar medium). As a result, the inventors found that surface-modified carbon black obtained by reacting the surface of carbon black with a polymer that contains a reactive silicone component having a structure similar to that of a silicone oil exhibits excellent dispersibility in a silicone oil.

The present invention was conceived based on the above finding. An object of the present invention is to provide surface-modified carbon black which exhibits excellent dispersibility in a silicone oil (i.e., non-polar medium), does not inhibit curing of a resin when incorporated in a resin medium, and exhibits excellent electrical insulating properties, and to provide a dispersion of the surface-modified carbon black.

Surface-modified carbon black according to the present invention which achieves the above object comprises an isocyanate compound having isocyanate groups on both ends and chemically bonded to a functional group on the surface of the carbon black, the isocyanate compound being chemically bonded to a reactive silicone polymer.

A surface-modified carbon black dispersion according to the present invention is produced by dissolving an isocyanate compound having isocyanate groups on both ends in a solvent, adding carbon black to the solution, mixing the components so that one of the isocyanate groups is chemically bonded to the surface of the carbon black, removing an unreacted isocyanate compound, dispersing the carbon black in a silicone oil, adding a reactive silicone polymer to the dispersion, followed by mixing and deaeration, whereby the other isocyanate group of the isocyanate compound bonded to the surface of the carbon black is chemically bonded to the silicone polymer.

In the surface-modified carbon black according to the present invention, the isocyanate compound having isocyanate groups on both ends is chemically bonded to the functional group on the surface of the carbon black and the reactive silicone polymer. The isocyanate compound having isocyanate groups on both ends functions as an intermediate that allows the carbon black to be bonded to the reactive silicone polymer.

The carbon black which is surface-modified by causing a reactive silicone polymer having a structure similar to that of a silicone oil to be bonded to the surface of the carbon black (and a silicone-oil dispersion of the carbon black) exhibits excellent dispersibility in a silicone oil (i.e., non-polar medium), does not inhibit curing of a resin when incorporated in a resin medium, exhibits excellent electrical insulating properties, and may be suitably used as an electronic paper display medium, a liquid crystal display black matrix, and the like.

### BEST MODE FOR CARRYING OUT THE INVENTION

The carbon black used in the present invention is not particularly limited insofar as the carbon black has functional groups (reactive groups) (e.g., hydroxyl group, carboxyl group, amino group, epoxy group, and sulfone group) on the surface. Furnace black, thermal black, channel black, or the like may be used. It is preferable to use carbon black having a primary particle diameter measured by electron microscopy of 0.01 to 0.3 µm. If the carbon black has a primary particle diameter of less than 0.01 µm, the carbon black tends to aggregate due to a large interparticle cohesive force. If the carbon black has a primary particle diameter of more than 0.3 µm, since the weight of the resulting surface-modified carbon black increases, the carbon black tends to precipitate in a silicone oil.

The functional groups on the surface of the carbon black may be produced and controlled by chemically modifying the carbon black. The carbon black may be chemically modified by the following methods, for example.
(1) A method in which hydroxyl groups and carboxyl groups are produced by gas-phase oxidation or liquid-phase oxidation, such as a method that exposes carbon black to a gas such as ozone, oxygen, NOₓ, or SOₓ, a method that treats carbon black by a low-temperature oxygen plasma, or a method that mixes carbon black with stirring in an aqueous solution of an oxidizing agent (e.g., ozone water, hydrogen peroxide aqueous solution, peroxo diacid or its salt, hypohalite, dichromate, permanganate, or nitric acid).
(2) A method in which amino groups are produced by producing nitro groups by oxidization with a nitric acid/sulfuric acid mixture, and reducing the nitro groups with a reducing agent such as formaldehyde.
(3) A method in which sulfone groups are produced by sulfonation with concentrated sulfuric acid.
(4) A method in which epoxy groups are produced by reacting hydroxyl groups and carboxyl groups with a halide having an epoxy group.

It is preferable to chemically modify the carbon black until the pH reaches 5.0 or less. Commercially-available acidic black or channel black having a pH of 5.0 or less may be directly used without oxidation.

When these functional groups are reacted with an isocyanate compound having isocyanate groups on both ends, the isocyanate compound is bonded to the surface of the carbon black via a chemical bond such as a urethane bond (OHOCN) or a urea bond (NH-CO-NH).

The following chemical equation 1 illustrates an example in which a hydroxyl group (functional group) on the surface of the carbon black is reacted with methyldiphenyl diisocyanate (isocyanate compound having isocyanate groups on both ends) so that the isocyanate compound is bonded to the surface of the carbon black.

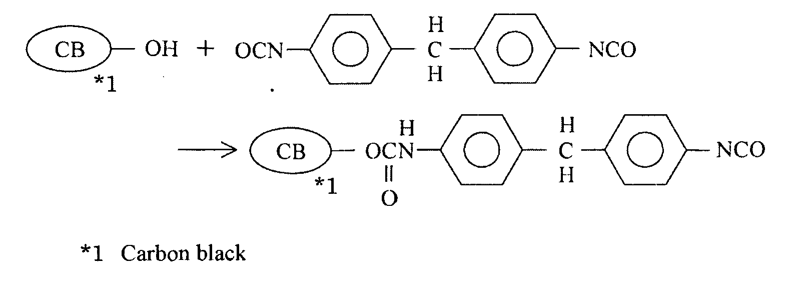

The surface-modified carbon black according to the present invention is produced (surface-modified) by causing an isocyanate compound having isocyanate groups on both ends to be bonded to a functional group on the surface of the carbon black (see chemical equation 1), and causing the unreacted isocyanate group of the isocyanate compound to be bonded to a reactive silicone polymer.

Specifically, the surface-modified carbon black according to the present invention is produced by causing an unbonded isocyanate group of an isocyanate compound having isocyanate groups on both ends which is bonded to a functional group on the surface of the carbon black to be bonded to a reactive silicone polymer. The isocyanate compound functions as an intermediate that allows the carbon black to be bonded to the reactive silicone.

The following chemical equation 2 illustrates the above reaction. The chemical equation 2 illustrates a reaction in which, after a hydroxyl group (see chemical equation 1) on the surface of the carbon black is reacted with methyldiphenyl diisocyanate so that a diphenylmethane group is bonded to the surface of the carbon black via a urethane bond, a polysiloxane having a hydroxyl group (reactive group) on one end is reacted with the resulting carbon black to produce surface-modified carbon black having a polysiloxane structure in which the diphenylmethane group is bonded to a polysiloxane group via a urethane bond (see chemical formula 1). 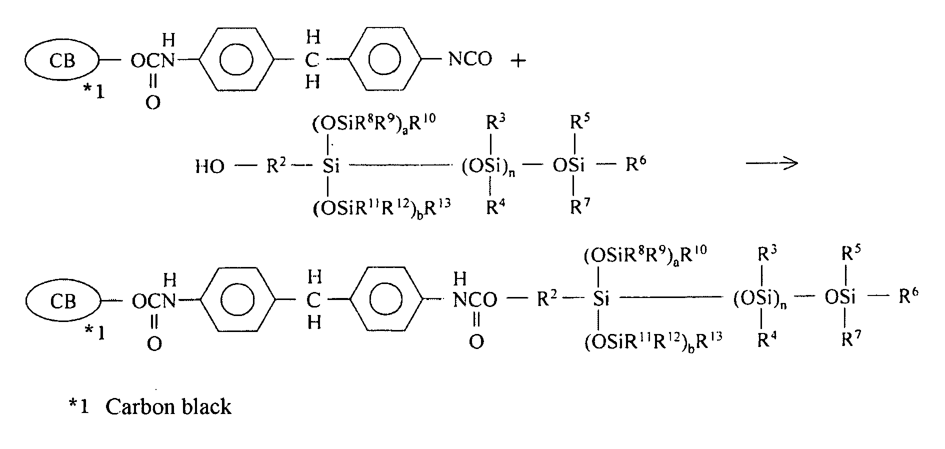 wherein R² represents an alkylene group having 1 to 6 carbon atoms, R³ to R¹³ individually represent an aryl group, an alkyl group having 1 to 6 carbon atoms, or an alkoxy group having 1 to 10 carbon atoms, and n represents an integer from 0 to 200.

The reactive group contained in the polysiloxane is not limited to a hydroxyl group, but may be another group (e.g., carboxyl group, amino group, epoxy group, or sulfone group) which reacts with an isocyanate group. The following chemical equation 3 illustrates a reaction when the polysiloxane has an amino group.

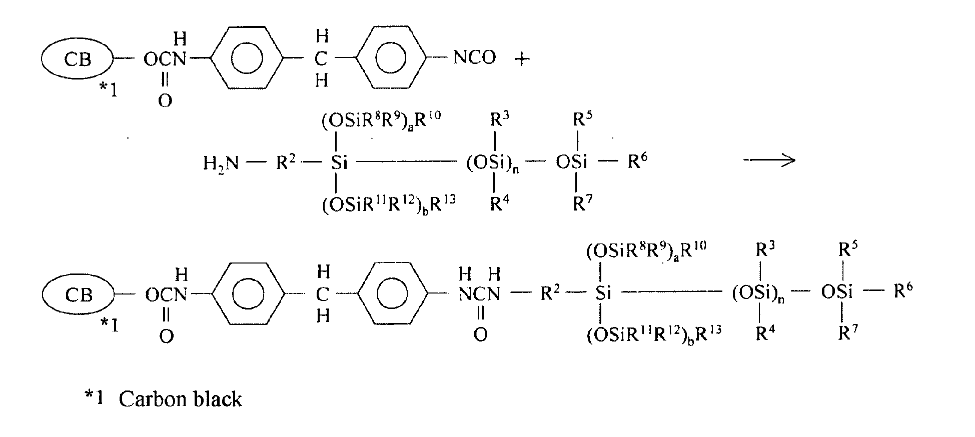

The surface-modified carbon black dispersion according to the present invention is produced by dispersing the surface-modified carbon black in a non-polar silicone oil. Specifically, the surface-modified carbon black dispersion according to the present invention is produced by dissolving an isocyanate compound having isocyanate groups on both ends in a solvent, adding carbon black to the solution, mixing the components so that one of the isocyanate groups is bonded to the surface of the carbon black via a urethane bond, removing an unreacted isocyanate compound, dispersing the carbon black in a silicone oil, adding a reactive silicone polymer to the dispersion, followed by mixing and deaeration. The production process is described in detail below.

The isocyanate compound must have isocyanate groups on both ends. The isocyanate group on one end is bonded to a functional group on the surface of the carbon black, and the isocyanate group of the other end is bonded to a reactive group on the end of the reactive silicone polymer.

Examples of the isocyanate compound having isocyanate groups on both ends include paraphenylene diisocyanate, 2-chloro-1,4-phenyl diisocyanate, 2,4-toluene diisocyanate (TDI), 2,6-toluene diisocyanate, 1,5-naphthalene diisocyanate, hexamethylene diisocyanate (HDI), diphenylmethane-4,4'-diisocyanate (MDI), 1,3-xylene-4,6-diisocyanate, diphenyl sulfide-4,4'-diisocyanate, 1,4-naphthalene diisocyanate, and the like. Of these, MDI, TDI, and HDI are preferably used.

The isocyanate compound is dissolved in an ester solvent (e.g., ethyl acetate or butyl acetate) or a ketone solvent. After the addition of the carbon black to the solution, the mixture is stirred and deaerated using a mixer/deaerator, and is homogenized using a triple roll mill or the like so that the isocyanate group is bonded to a functional group on the surface of the carbon black. In this case, a urethane reaction easily proceeds by adding a small amount of dehydration/condensation agent such as dibutyltin dilaurate.

After dissolving the mixture in a solvent, the carbon black is further dispersed using an ultrasonic homogenizer, a high-pressure homogenizer, a process homogenizer, or the like. The mixture is then heated at a temperature of 25 to 100°C for an appropriate period of time so that the isocyanate compound is strongly bonded to a functional group on the surface of the carbon black via a urethane bond.

In this case, if the isocyanate compound remains unreacted, aggregation of the carbon black and aggregation of the reactive silicone polymer through the isocyanate compound (intermediate) are promoted. Therefore, an unreacted isocyanate compound is removed by processing the dispersion after heating using a high-speed centrifuge. If the carbon black is dried during centrifugation, aggregation of the carbon black occurs. Therefore, the centrifugal force is set at a low level. It is preferable to remove an unreacted isocyanate compound through purification by repeating an operation that adds a solvent to the dispersion, disperses the carbon black again, and centrifuges the dispersion several times.

The carbon black of which the functional group on the surface has been bonded to the isocyanate compound via a urethane bond is mixed into and dispersed in a silicone oil (non-polar solvent). After the addition of a reactive silicone polymer, the mixture is stirred and deaerated, and is then homogenized using a triple roll mill or the like so that the isocyanate group on the other end of the isocyanate compound is bonded to the reactive silicone polymer. In this case, the above reaction easily proceeds by adding a small amount of dehydration/condensation agent such as dibutyltin dilaurate.

As the reactive silicone polymer used to cause the isocyanate group to be bonded to a polysiloxane group, a polysiloxane having a reactive functional group (e.g., amino group, hydroxyl group, carboxyl group, or epoxy group) is used. The reactive silicone polymer may have a reactive functional group on one end, on both ends, or in a side chain. It is preferable to use a reactive silicone polymer having a reactive functional group on only one end from the viewpoint of reactivity.

It is preferable that the reactive silicone polymer have a structure similar to the structure of a silicone oil. Since a silicone oil generally has a polysiloxane structure, it is preferable that the reactive silicone polymer have a polysiloxane structure.

Since the surface-modified carbon black contained in the carbon black dispersion according to the present invention is dispersed in a silicone oil with steric hindrance due to the silicone polymer chain bonded to the surface of the carbon black, it is preferable to use a reactive silicone polymer having a molecular weight of 500 to 30,000. If the reactive silicone polymer has a molecular weight of less than 500, the surface-modified carbon black exhibits poor dispersibility since steric hindrance due to the polymer chain decreases. If the reactive silicone polymer has a molecular weight of more than 30,000, the surface-modified carbon black tends to precipitate due to its weight, or the viscosity of the dispersion increases due to an increase in viscosity of the reactive silicone polymer.

After diluting the mixture with a silicone oil, the mixture is mixed using an ultrasonic homogenizer, a high-pressure homogenizer, a process homogenizer, or the like. The surface-modified carbon black to which the isocyanate compound and the reactive silicone polymer are bonded on the surface thus exhibits improved dispersibility in a silicone oil.

After heating the dispersion to remove a small amount of solvent remaining in the dispersion, the concentration of the dispersion is adjusted by adding a silicone oil to obtain a surface-modified carbon black dispersion.

### EXAMPLES

The present invention is described below by way of examples and comparative

### examples.

### Example 1

Carbon black "TB #7550F" (manufactured by Tokai Carbon Co., Ltd.) was subjected to liquid phase oxidization in an oxidizing agent aqueous solution (2N sodium persulfate aqueous solution), filtered, washed, and then dried to prepare an oxidized carbon black sample having a pH of 2.0.

A mixer/deaerator was charged with a methyl ethyl ketone solution in which 12.5 g of methanediphenyl diisocyanate (MDI) (isocyanate compound having isocyanate groups on both ends) was dissolved at a concentration of 15 wt%, 150 g of an inert dimethylpolysiloxane ("TSF451-1000" manufactured by GE Toshiba Silicones Co., Ltd.), and 75 g of the oxidized carbon black sample which was sufficiently dried. The mixture was subjected to pre-mixing (stirred for two minutes and deaerated for two minutes), and then homogenized for 30 minutes using a triple roll mill ("SR-4" manufactured by Inoue Mfg., Inc.). After the addition of a silicone oil ("KF96L-1cs " manufactured by Shin-Etsu Chemical Co., Ltd.) solution in which 0.875 g of dibutyltin dilaurate was dissolved at a concentration of 10 wt% to the mixture, the mixture was homogenized for 30 minutes using a triple roll mill. Since methyl ethyl ketone used as the solvent volatilizes, methyl ethyl ketone was appropriately added.

After the addition of methyl ethyl ketone to the mixture (total amount: one liter), the carbon black to which the isocyanate compound was bonded was dispersed in the solvent using an ultrasonic homogenizer ("Ultrasonic Generator US" manufactured by NISSEI Corporation) (10 minutes) and a high-pressure homogenizer ("Nanomizer TL-1500" manufactured by Tokai Corporation) (pressure: 50 to 150 MPa). The mixture was then heated in a separable flask at 60°C for two hours with stirring.

The dispersion after heating was centrifuged at 3000 rpm for three minutes. After removing the supernatant liquid, methyl ethyl ketone was added to the mixture. The mixture was then centrifuged. This operation was repeated twice. After the addition of a silicone oil to the residue, the mixture was centrifuged twice.

The residue was equally divided into three portions, and mixed with 16.25 g of a reactive silicone ("TSF4709 " manufactured by GE Toshiba Silicones Co., Ltd.). The mixture was homogenized for 30 minutes using a triple roll mill. After the addition of a silicone oil solution in which 0.875 g of dibutyltin dilaurate was dissolved at a concentration of 10 wt%, the mixture was homogenized for 30 minutes using a triple roll mill.

After the addition of a silicone oil to the mixture (total amount: 250 g), the mixture was heated in a separable flask at 60°C for four hours with stirring. The dispersion after heating was mechanically dispersed at pressure of 50 to 150 MPa using a Nanomizer.

The dispersion was heated at 80°C for one hour in a dryer, and then filtered twice through a No. 131 filter paper (manufactured by Advantec). A silicone oil was then added to the mixture (total amount: 250 g) to obtain a silicone-oil surface-modified carbon black dispersion 1 with a carbon black concentration of 10 wt%.

### Example 2

Carbon black "TB #7550F" (manufactured by Tokai Carbon Co., Ltd.) was subjected to gas phase oxidization with ozone to prepare an oxidized carbon black sample having a pH of 2.5.

A silicone-oil surface-modified carbon black dispersion 2 with a carbon black concentration of 10 wt% was produced in the same manner as in Example 1 using the resulting carbon black sample.

### Example 3

A surface-modified carbon black dispersion 3 was produced in the same manner as in Example 1, except for using Special Black 4 (manufactured by Degussa (pH: 2.3)) as the carbon black.

### Comparative Example 1

A surface-modified carbon black dispersion 4 was produced in the same manner as in Example 1, except for using carbon black ("TB #7550F" manufactured by Tokai Carbon Co., Ltd. (pH: 6.8)) which was not oxidized.

### Comparative Example 2

A surface-modified carbon black dispersion 5 was produced in the same manner as in Example 1, except that the isocyanate compound was not used.

The average particle diameter of carbon black agglomerates in the dispersion was measured using a Microtrac grain size analyzer ("9340-UPA150" manufactured by Honeywell). The viscosity of the dispersion was measured using a vibratory viscometer (manufactured by Yamaichi Electronics Ltd.). The dispersion state of the carbon black was observed with the naked eye. Table 1 shows the change in measurement results with time.

**TABLE 1**

| | | Dispersion 1 | Dispersion 2 | Dispersion 3 | Dispersion 4 | Dispersion 5 |
|---|---|---|---|---|---|---|
| After 0 weeks | Average particle diameter (nm) | 146 | 178 | 304 | 2245 | 2045 |
| | Viscosity (cp) Dispersion state^{*1} | 1.75 Good | 1.45 Good | 1.14 Fair | 0.83 Bad | 0.80 Bad |
| After 1 week | Average particle diameter (nm) | 196 | 204 | 359 | 4067 | 2225 |
| | Viscosity (cp) | 1.49 | 1.23 | 1.08 | 0.93 | 0.90 |
| After 2 weeks | Average particle diameter (nm) | 161 | 187 | 456 | 5087 | 2190 |
| | Viscosity (cp) | 1.53 | 1.34 | 1.15 | 0.96 | 0.93 |
| After 3 weeks | Average particle diameter (nm) | 154 | 183 | 434 | 5255 | 2188 |
| | Viscosity (cp) | 1.54 | 1.35 | 1.16 | 0.97 | 0.94 |
| After 4 weeks | Average particle diameter (nm) | 152 | 181 | 445 | 5343 | 2195 |
| | Viscosity (cp) | 1.52 | 1.33 | 1.14 | 0.95 | 0.92 |

| | | | | | | |
|---|---|---|---|---|---|---|
| *1: Good: The carbon black exhibited excellent dispersibility. Fair: The carbon black was dispersed, but precipitated with the passage of time. Bad: The carbon black was not dispersed and precipitated. | | | | | | |

As shown in Table 1, the dispersions 1 to 3 according to the present invention exhibited excellent dispersibility as compared with the dispersions 4 and 5 which were outside the conditions of the present invention. The dispersions 2 and 3 exhibited poor dispersibility since a small number of functional groups were produced on the surface of the carbon black as compared with the dispersion 1.

## Claims

1. Surface-modified carbon black comprising an isocyanate compound having isocyanate groups on both ends and chemically bonded to a functional group on the surface of the carbon black, the isocyanate compound being chemically bonded to a reactive silicone polymer.

2. A surface-modified carbon black dispersion produced by dissolving an isocyanate compound having isocyanate groups on both ends in a solvent, adding carbon black to the solution, mixing the components so that one of the isocyanate groups is chemically bonded to the surface of the carbon black, removing an unreacted isocyanate compound, dispersing the carbon black in a silicone oil, adding a reactive silicone polymer to the dispersion, followed by mixing and deaeration, whereby the other isocyanate group of the isocyanate compound bonded to the surface of the carbon black is chemically bonded to the silicone polymer.
